Europäisches Patentamt

European Patent Office

Office européen des brevets

(11) Veröffentlichungsnummer: **0 459 989 B1**

# (12) EUROPÄISCHE PATENTSCHRIFT

(45) Veröffentlichungstag der Patentschrift: **26.07.95**

(51) Int. Cl.6: **C09K 3/10**

(21) Anmeldenummer: **90901780.8**

(22) Anmeldetag: **25.01.90**

(86) Internationale Anmeldenummer:
**PCT/EP90/00136**

(87) Internationale Veröffentlichungsnummer:
**WO 90/10041 (07.09.90 90/21)**

(54) **VERFAHREN ZUR HERSTELLUNG VON VERSCHLÜSSEN FÜR VERPACKUNGSBEHÄLTER.**

(30) Priorität: **23.02.89 DE 3905545**

(43) Veröffentlichungstag der Anmeldung:
**11.12.91 Patentblatt 91/50**

(45) Bekanntmachung des Hinweises auf die
Patenterteilung:
**26.07.95 Patentblatt 95/30**

(84) Benannte Vertragsstaaten:
**AT BE CH DE DK ES FR GB GR IT LI NL SE**

(56) Entgegenhaltungen:
**EP-A- 0 224 138**
**GB-A- 2 167 426**

**Derwent File Supplier, JAPS, Derwent Publication Ltd, (London, GB), & JP-A-59131669 (Takeda) 28. Juli 1984**

**Derwent File Supplier, WPIL, Derwent Publication Ltd, (London, GB), & JP-A-63156879 (Sanyo) 29. Juni 1988**

(73) Patentinhaber: **BASF Lacke + Farben AG**
**Glasuritstrasse 1**
**D-48165 Münster-Hiltrup (DE)**

(72) Erfinder: **WASCHINSKI, Klaus-Markus**
**Wilhelm-Haverkamp-Stra e 9**
**D-4403 Senden (DE)**
Erfinder: **SCHMITZ, Arno**
**Fasanenfeld 33**
**D-4405 Nottuln (DE)**
Erfinder: **RÜBARTSCH, Ute**
**Burgstrasse 5**
**D-4408 Dülmen 3 (DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

**Beschreibung**

Gegenstand der vorliegenden Erfindung ist ein Verfahren zur Herstellung von Verschlüssen zum dichten Verschließen von Verpackungsbehältern, bei dem auf die Innenseite der Verschlüsse eine Dichtungsmasse appliziert und eingebrannt wird.

Die Erfindung betrifft außerdem Verschlüsse für Verpackungsbehälter, bei denen auf der Innenseite eine Dichtungsmasse appliziert und eingebrannt worden ist sowie Verpackungsbehälter mit diesen Verschlüssen.

Der Zweck der verschiedenen Verpackungsmaterialien ist der hermetische Abschluß des Füllgutes von den Umgebungseinflüssen, und zwar auch unter extremen Bedingungen, wie sie z.B. bei der Hitzesterilisation von Lebensmitteln herrschen. Um diese Isolierung der Füllgüter von der Umgebung zu gewährleisten, werden in Deckel und Verschlüsse mit dem der Verpackungsbehälter verschlossen wird, geeignete Dichtungsmassen eingebracht.

Kommerziell, d.h. wirtschaftlich befriedigende Dichtungsmassen für Verschlüsse müssen eine Anzahl kritischer Eigenschaften besitzen, durch die sie hochspezialisierte Werkstoffe und Zusammensetzungen darstellen. Weiterhin werden die geforderten Eigenschaften der Dichtungsmassen auch vom Einsatzzweck der Verpackungen mitbestimmt.

So ist bei Lebensmittelverpackungen insbesondere die Beständigkeit der Dichtungsmassen gegenüber den Füllgütern bei der Sterilisation bzw. Pasteurisierung sowie der oft jahrelangen Lagerung der verpackten Lebensmittel von Bedeutung. Im Falle der technischen Verpackungen handelt es sich oftmals um che-misch recht reaktive bzw. aggressive Füllgüter, gegen die die Dichtungsmassen ebenfalls beständig sein sollen.

Üblicherweise werden für Verschlüsse und Deckel von Verpackungen aus Glas und Metall Dichtungsmassen aus weichmacherhaltigen PVC-Plastisolen verwendet, wie sie im Falle der Verschlüsse für Gläser beispielsweise in der DE-AS 20 03 693 beschrieben sind.

Die als Dichtungsmasse eingesetzten PVC-Plastisole bestehen in der Regel aus einem verpastbaren Polyvinylchlorid, das sich im besonderen durch ein definiertes Quellvermögen im Weichmacher auszeichnet, aus einem oder mehreren Weichmachern und ggf. Füllstoffen, Stabilisatoren, Pigmenten und Polyvinylchlorid-Verarbeitungshilfsstoffen.

Die Formulierung von weichmacherhaltigen PVC-Plastisolen, deren Herstellung und Verarbeitung ist weitgehend in K. Weinmann, Beschichten mit Lacken und Kunststoffen, 1967, Verlag W.A. Colomb, Stuttgart, beschrieben.

Es ist bekannt, daß bei solchen PVC-Dichtungsmassen unter Einfluß der Füllgüter, insbesondere durch fettige und ölige Substanzen, und thermischer Beanspruchung (Pasteurisation, Sterilisation) grundsätzlich eine Weichmachermigration aus der Dichtungsmasse sowie ein Anlösen und Anquellen der Dichtungsmasse bei lösemittelhaltigen Füllgütern nicht verhindert werden kann.

Die Weichmachermigration kann in ihrer Größe derzeit gültige und in Diskussion befindliche lebensmittelrechtliche Vorschriften überschreiten. Weiterhin bedingt die Weichmachermigration unter Umständen einen Vakuumverlust bei pasteurisierten und sterilisierten Verpackungen sowie einen Verlust von Lösemitteln durch eine gesteigerte Gasdurchlässigkeit im Falle von technischen Verpackungen. Bei technischen Verpackungen besteht ebenfalls grundsätzlich das Problem der Verunreinigung der Füllgüter durch die Weichmachermigration und Anquellung bzw. Anlösung des Polyvinylchlorids. Ein weiterer Nachteil dieser Dichtungsmassen ist es, daß die Entsorgung von PVC-haltigen Abfällen zuneh-mend problematisch und kostenintensiv wird.

Neben den üblicherweise eingesetzten PVC-Dichtungsmassen sind aber auch Dichtungsmassen auf Polyurethan-Basis bekannt. So sind beispielsweise in der US-PS 3,971,785 und in der GB-PS 1,374,745 Dichtungsmassen für Verpackungsbehälter beschrieben, die - ggf. blockierte - Polyisocyanatpräpolymere und mit Kohlendioxid blockierte Amine als Vernetzer enthalten. Aus der DE-OS 19 57 827 und der DE-OS 22 03 730 sind Dichtungsmassen bekannt, die hydroxylgruppenhaltige Polymere und Polyisocyanate bzw. blockierte Präpolymere sowie einen Aktivator mit hydroxylgruppenhaltigen Polymeren und Aluminiumsilikat-Verbindungen enthalten.

Der vorliegenden Erfindung lag somit die Aufgabe zugrunde, ein Verfahren zur Herstellung von Verschlüssen zum dichten Verschluß von Verpackungsbehältern zur Verfügung zu stellen, bei dem die auf den Innenseiten der Verschlüsse aufgebrachten Dichtungsmassen im Vergleich zu den üblicherweise eingesetzten Dichtungsmassen auf Basis von PVC-Plastisolen keine Weichmachermigration und möglichst niedrige Migration anderer Bestandteile des Dichtungsmaterials in das Füllgut aufweisen. Im Falle der Lebensmittelverpackungen soll daher die Dichtungsmasse insbesondere unter den Bedingungen der Sterilisation und Pasteurisation beständig sein und nicht in das Füllgut wandern. Für technische Verpackungen ist insbesondere Chemikalienbeständigkeit gefordert.

Gleichzeitig soll das Verfahren möglichst einfach und mit nur einem geringen Aufwand durchführbar sein. So sollen die Dichtungsmassen auf den gleichen Applikationsanlagen verarbeitbar sein, wie die herkömmlichen PVC-Plastisole. Zur problemlosen Handhabung soll es sich um ein lösungsmittelfreies thermoreaktives 1-Komponenten-System mit guter Lagerstabilität handeln.

Schließlich sollen die Dichtungsmassen auch eine gute Haftung auf dem Verschluß, der sowohl mit einem in der Verpackungsindustrie üblichen Lack beschichtet als auch unbeschichtet sein kann, aufweisen.

Überraschenderweise wird diese Aufgabe durch ein Verfahren zur Herstellung von Verschlüssen zum dichten Verschließen von Verpackungsbehältern gelöst, bei dem auf die Innenseite der Verschlüsse eine Dichtungsmasse appliziert und eingebrannt wird. Das Verfahren ist dadurch gekennzeichnet, daß die Dichtungsmasse aus

A) 65 bis 93 Gew.-% eines flüssigen, blockierten Diisocyanates

B) 2 bis 15 Gew.-% eines flüssigen Di- und/oder Polyamins

C) 0 bis 25 Gew.-% Pigmente und/oder Füllstoffe

D) 0 bis 20 Gew.-% eines oder mehrerer reaktiver Verdünner

E) 0 bis 8 Gew.-% Hilfs- und Zusatzstoffe besteht, wobei die Summe der Gewichtsanteile der Komponenten A bis E jeweils 100 Gew.-% beträgt.

Gegenstand der vorliegenden Erfindung sind außerdem die nach dem erfindungsgemäßen Verfahren hergestellten Verschlüsse und diese Verschlüsse enthaltende Verpackungsbehälter.

Nun sind aus der DE-OS 16 44 813 zwar Einbrennlacke bekannt, die ebenfalls auf der Basis blockiertes Toluylendiisocyanat und Aminvernetzer aufgebaut sind, doch gibt diese Schrift keinen Hinweis, die Einbrennlacke als Dichtungsmasse einzusetzen. Auch erhält der Fachmann keinen Hinweis zur Lösung der der vorliegenden Anmeldung zugrundeliegenden Aufgabe. Der DE-OS 16 44 813 lag vielmehr die Aufgabe zugrunde, ein Verfahren zur Herstellung lagerstabiler Lacklösungen zur Verfügung zu stellen.

Weiterhin ist es aus der Produktinformation "Desmodur$^R$ BL 1100" der Firma Bayer AG bekannt, daß mit diesem Isocyanat "Desmodur$^R$ BL 1100" - einem flüssigen, blockiertem aromatischen Polyisocyanat in Kombination mit cycloaliphatischen Diaminen als Reaktionspartner Filme mit gummielastischem Charakter erzielt werden. Aber auch diese Schrift gibt weder einen Hinweis auf die Verwendung derartiger Systeme als Dichtungsmassen bei der Herstellung von Verschlüssen für Verpackungsbehälter noch Hinweise für den Durchschnittsfachmann zur Lösung der der vorliegenden Anmeldung zugrundeliegenden Aufgabe. Vielmehr spricht die dort genannte schlechte Lösemittelbeständigkeit der Beschichtungen gegen die Verwendung derartiger Systeme als Dichtungsmassen von Verschlüssen für Verpackungsbehälter.

Im folgenden werden nun zunächst die in dem erfindungsgemäßen Verfahren eingesetzten Dichtungsmassen näher erläutert.

Als Komponente A der Dichtungsmassen geeignet sind alle blockierten Diisocyanate, die bei Raumtemperatur flüssig sind. Weiterhin muß gewährleistet sein, daß im Falle der Lebensmittelverpackungen keine Verunreinigungen des Füllgutes durch evt. noch vorhandene Reste des Blockierungsmittels und Migration dieser Reste in das Füllgut auftreten.

Beispiele für geeignete Blockierungsmittel der Komponente A sind Lactame, wie z.B. $\epsilon$-Caprolactam, $\delta$-Valerolactam, Oxime, wie z.B. Acetonoxim, Diethylketoxim, Acetophenonoxim, Cyclohexanonoxim, Cyclopentanonoxim, Methylethylketoxim, Butanonoxim, Benzophenonoxim, Formaldoxim, Acetaldoxim sowie Phenole. Bevorzugt eingesetzt werden Caprolactame, besonders bevorzugt $\epsilon$-Caprolactam.

Als Isocyanatkomponente geeignet sind alle Diisocyanate, deren vollständig mit einem der oben genannten Blockungsmittel umgesetzte Form flüssig ist und die zu Systemen führen, die bevorzugt Shore-A-Härten (DIN 53 505) zwischen 20 und 80 aufweisen. Als Beispiele für geeignete Diisocyanate seien 2,4- und 2,6-Toluylendiisocyanat sowie Mischungen dieser Isomeren genannt.

Die Komponente A wird in den Dichtungsmassen in einer Menge von 65 bis 93 Gew.-%, bevorzugt 70 bis 90 Gew.-%, jeweils bezogen auf die Gesamtzusammensetzung, eingesetzt.

Zur Vernetzung der blockierten Isocyanate geeignete Verbindungen (Komponente B), die in einer Menge von 2 bis 15 Gew.-%, bevorzugt 6 bis 12 Gew.-%, jeweils bezogen auf die Gesamtzusammensetzung, eingesetzt werden, sind flüssige Di- und/oder Polyamine, insbesondere flüssige cycloaliphatische Diamine, wie z.B. 4,4-Diamino-3,3-di- methyldicyclohexylmethan, 4,4-Diaminodicyclohexylmethan, Polyoxypropylentriamin mit einem mittleren Molekulargewicht $M_w$ von 400 bis 450 sowie flüssige Polyaminoamide, wie beispielsweise das Handelsprodukt "Versamid 100" der Firma Schering AG und durch Kondensation von di- und trimeren Fettsäuren mit aliphatischen Aminen hergestellte flüssige Polyaminoamide. Die Aminogruppen der eingesetzten Aminoverbindungen sind primärer und/oder sekundärer Natur.

Als weiteren Bestandteil enthalten die Dichtungsmassen noch 0 bis 25 Gew.-%, bevorzugt 0 bis 20 Gew.-%, jeweils bezogen auf die Gesamtzusammensetzung, Pigmente und/oder Füllstoffe (Komponente C), wie beispielsweise Titandioxid, synthetische Eisenoxide, organische Pigmente, wie beispielsweise Phthalocyanine, Tartrazine, Ultramarinblau, Pigment Yellow 83, Pigment Orange 43, Pigment Orange 5, Pigment Rot 4 sowie Magnesium- und Aluminiumsilikate, amorphe und pyrogene Kieselsäure, Bariumsulfat, Ruß, Talkum, Kaolin und Kreide.

Zur Einstellung einer für die Applikation günstigen Viskosität können die Dichtungsmassen noch 0 bis 20 Gew.-%, bevorzugt 0 bis 10 Gew.-%, jeweils bezogen auf die Gesamtzusammensetzung eines oder mehrerer reaktiver Verdünner enthalten (Komponente D). Beispiele für geeignete Verbindungen sind Polyole, wie z.B. Propylenglykol und Diethylenglykol.

Schließlich können die erfindungsgemäß eingesetzten Dichtungsmassen noch 0 bis 8 Gew.-%, bezogen auf die Gesamtzusammensetzung, weiterer Hilfs- und Zusatzstoffe (Komponente E) enthalten. Beispiele hierfür sind Gleitmittel zur Einstellung der richtigen Drehmomentwerte bei Verschlüssen, die aufgeschraubt oder aufgedreht werden müssen. Geeignete Gleitmittel schließen fettige Säuren, wie Stearin- und Oleinsäure, Silikonöle, wie Dimethylpolysiloxan und Methylhydrogenpolysiloxan ein.

Weiterhin als Komponente E eingesetzt werden Wachse und Kieselsäuren zur Erzielung bestimmter Fließverhalten und im Falle von geschäumten Dichtungsmassen Treibmittel, wie z.B. Azodicarbonamide oder Sulfohydrazide.

Geschäumte Dichtungsmassen werden wegen ihrer im Vergleich mit nichtgeschäumten Dichtungsmassen höheren Elastizität in Eimerdeckeln, Fässerdeckeln und Hobbock-Deckeln eingesetzt, während für Gläser- und Flaschenverschlüsse die Dichtungsmassen im allgemeinen nicht geschäumt sind. Allgemein bewirkt das Schäumen der Dichtungsmassen eine Erniedrigung der Shore-A-Härte (gemessen nach DIN 53 505), eine Erhöhung der Flexibilität, eine Volumenerhöhung und die Erzielung einer besseren Abdichtfunktion durch eine bessere Verformbarkeit.

Die Herstellung der Dichtungsmassen erfolgt durch Mischen der einzelnen Komponenten, wobei gegebenenfalls zuerst die unlöslichen Anteile, z.B. Pigmente, zu der Komponente A zugesetzt und - soweit erforderlich -mit den in der Lackindustrie üblichen Dispergieraggregaten dispergiert werden. Bei der Herstellung von nicht geschäumten Dichtungsmassen wird das Mischen bzw. Dispergieren gewöhnlich unter Vakuum durchgeführt. Die so hergestellten Dichtungsmassen weisen im allgemeinen Shore-A-Härten (DIN 53 505) zwischen 20 und 80, bevorzugt zwischen 25 und 70 auf.

Die Auftragsmenge der Dichtungsmassen hängt von der Geometrie des Verschlußteils, vom Verwendungszweck der Verpackung sowie davon ab, ob die Dichtungsmasse geschäumt ist oder nicht.

Zur Herstellung der Verschlüsse nach dem erfindungsgemäßen Verfahren werden die oben beschriebenen Dichtungsmassen auf die Innenseite der Verschlüsse appliziert, bevorzugt mittels des bekannten sogenannten "Einfließverfahrens". Bei diesem Verfahren wird die Dichtungsmasse bei leicht erhöhter Temperatur, gewöhnlich etwa 40°C, in ungehärtetem pastenartigem Zustand aus einer oder mehrerer Düsen in die Verschlußteile gedruckt bzw. gespritzt, die mit der Innenseite nach oben auf einem Saugnapf oder dgl. mit hoher Drehzahl in Rotation versetzt werden. Aufgrund der Zentrifugalkräfte wird die Dichtungsmasse in die gewünschte Kontur und Gestalt überführt. Nachdem dieses Einfließen vollzogen ist, findet die Aushärtung der Dichtungsmassen bei Temperaturen zwischen 170°C und 190°C während einer Trockenzeit von 2 bis 10 min statt. Die Trocknung und die dafür eingesetzten Vorrichtungen sind ebenfalls bekannt und brauchen daher hier nicht näher erläutert werden.

Unter dem mit der Dichtungsmasse zu beschichtenden Verschluß werden alle Teile des Verpackungsmaterials verstanden, die mit dem Rumpf der Verpackungen verbunden werden, z.B. Kronkorken, z.B. bei Bier-, Fruchtsaft- und Limonadenflaschen, Verschlüsse für Flaschen und Gläser sowie weiteren in der Verpakkungsindustrie üblichen Verschlüssen für Kannen, Eimer, Fässer usw. Diese Verschlüsse können aus Metallen bestehen, wie Aluminium, Schwarzblech, Weißblech und verschiedenen Eisenlegierungen, die ggf. mit einer Passivierungsschicht auf Basis von Nickel-, Chrom- und Zinkverbindungen versehen sind.

Die Dichtungsmasse kann bei dem erfindungsgemäßen Verfahren auf unbeschichtete oder beschichtete Verschlüsse appliziert werden. Als Beschichtungsmittel kommen in der Verpackungsindustrie übliche Lacke auf Epoxy-Phenolharz-Basis, Acrylatharz-Basis, Polyester-Basis oder Organosole in Frage. Diese Lacke sind aber bekannt (vgl. z.B. H. Kittel, Lehrbuch der Lacke und Beschichtungen, Band IV, Lack- und Beschichtungssysteme, Formulierung, Verlag W.A., Colomb in der H. Heenemann GmbH, Berlin-Oberschwandorf 1976) und müssen daher hier nicht näher beschrieben werden.

Neben den Einschichtlackierungen werden, insbesondere für säurehaltige Füllgüter und für Fleisch als Füllgut, auch Zweischichtlackierungen mit einer Grundierung auf Epoxy-Phenolharz-Basis und einer Organosol-, Polyester- oder Acrylat-Deckschicht eingesetzt.

Die nach dem erfindungsgemäßen Verfahren hergestellten Verschlüsse weisen insbesondere den Vorteil auf, daß die Dichtungsmassen im Vergleich zu den üblichen PVC-Dichtungsmassen keine Weichmachermigration aufweisen und eine gute Lösemittel- und Chemikalienbeständigkeit, gute Beständigkeit unter den Bedingungen der Pasteurisierung und Sterilisation sowie eine gute Haftung zu beschichteten, beson-

4

ders aber zu unbeschichteten üblichen Untergründen besitzen.

Im folgenden wird die Erfindung anhand von Ausführungsbeispielen näher erläutert. Soweit nicht ausdrücklich etwas anderes festgestellt wird, beziehen sich alle Angaben über Teile und Prozentsätze auf Gewichtsangaben.

Zunächst werden aus den in Tabelle 1 angegebenen Komponenten die Dichtungsmassen A bis F hergestellt. Von diesen Dichtungsmassen A bis F wird mit Hilfe eines DIN-Auslaufbechers 8 mm die Viskosität (angelehnt an DIN-Norm 53 211) sowie die Shore-A-Härte (DIN-Norm 53 505) von Prüfkörpern gemessen. Die Ergebnisse dieser Untersuchungen sind ebenfalls in Tabelle 1 dargestellt.

Zur Untersuchung des Migrationsverhaltens der erfindungsgemäßen Dichtungsmassen im Vergleich mit Dichtungsmassen auf Basis von PVC-Plastisolen wurde zunächst die Dichtungsmasse E auf ein Metallblech in einer Schichtdicke appliziert, die dem normalen Auftragsgewicht in Verschlüssen entspricht (vgl. Tabellen 6 bis 14).und während 5 min bei 190°C aufgehärtet. Für die Migrationstests wurde jeweils 1 cm$^2$ Oberfläche der Dichtungsmasse mit 2 ml der Prüflösung in Berührung gebracht. Die auswandernden Fremdstoffmengen wurden als Globalmigrate in Form der Trockenrückstände ermittelt.

Der chloroformlösliche Anteil der Trockenrückstände wurde gleichfalls festgestellt. Die Ergebnisse dieser Untersuchungen sind in Tabelle 3 dargestellt. Die Migrate wurden außerdem qualitativ und quantitativ auf organisch gebundenen Stickstoff, Phenol, Formaldehyd und Schwermetalle untersucht. Die Ergebnisse sind in Tabelle 4 zusammengestellt.

Außerdem wurde noch eine sensorische Prüfung durchgeführt, indem man jeweils 10 ml bzw. 2 ml verschiedener Testlösungen (Leitungswasser, Mineralwasser, Apfelsaft) auf jeweils 1 cm$^2$ Oberfläche der Dichtungsmasse unter den in Tabelle 4 angegebenen Bedingungen einwirken ließ. Die Testlösungen wurden von mehreren Prüfpersonen unabhängig voneinander im Dreieckstest gegenüber Blindlösungen geprüft, die nicht mit dem Dichtungsmaterial in Berührung gestanden hatten. Die Beurteilung erfolgte in Anlehnung an DIN 10 955. Die Prüfergebnisse sind in Tabelle 5 dargestellt.

Zum Vergleich wurde außerdem die Dichtungsmasse V auf Basis eines weichmachhaltigen PVC-Plastisols analog zu den Dichtungsmassen A bis E untersucht. Die Zusammensetzung dieser Dichtungsmasse V ist in Tabelle 2 und die Prüfergebnisse sind in den Tabellen 3 bis 5 dargestellt.

Weiterhin werden die Dichtungsmassen noch im Hinblick auf ihre Beständigkeit, Haftungseigenschaften und Dichtungswirkung bei Verwendung in Kronkorken (vgl. Tabelle 6 und 7), Flaschendrehverschlüssen (vgl. Tabelle 8,) Gläserverschlüssen (vgl. Tabellen 9 und 10), Hobbock-Deckeln (vgl. Tabellen 11 und 12), Eimerdeckeln (vgl. Tabellen 13 und 14) und Fässerdeckeln (vgl. Tabelle 15) bei unterschiedlicher Beanspruchung (z.B. Sterilisation) untersucht. Hierzu wird zunächst die Dichtungsmasse in der jeweils angegebenen Menge mittels eines in der Verpackungsbehälterindustrie üblichen Spritzautomatens appliziert und 5 min. bei 190°C getrocknet. Zur Prüfung der Eigenschaften im Falle von Lebensmittelverpackungen werden die jeweiligen Behälter (Flaschen, Gläser usw., je nach Verschlußteil) mit verschiedenen Testlösungen (Wasser, 3 %ige Kochsalzlösung, 2 %ige Kochsalz- und 3 %ige Essigsäure-Lösung, 1- und 2 %ige Milchsäurelösung, 4 %ige Oxalsäurelösung und Lösung von 0,5 g Cystein in 1 l Wasser) gefüllt und 45 min. bei 125°C sterilisiert. Anschließend werden Beständigkeit der Dichtungsmasse, Haftung und Dichtungswirkung untersucht und beurteilt. Zur Simulierung von technischen Füllgütern werden die Verpackungen mit Methylethylketon, Trichlorethylen, Methylenchlorid und Ethanol gefüllt und 3 Monate verschlossen bei Raumtemperatur gelagert. Anschließend werden die technischen Eigenschaften der Dichtungsmasse gesucht.

Im folgenden werden nun die einzelnen Prüfmethoden näher erläutert:

Haftungsprüfung

Die Dichtungsmasse wird angeritzt und es wird versucht, die Dichtungsmasse manuell zu entfernen:
- gute Haftung: Dichtungsmasse nur unter Zerstörung entfernbar
- brauchbare Haftung: Dichtungsmasse mit hohem Aufwand (großer Widerstand) als Ring oder in Teilstücken abhebbar
- schlechte Haftung: leichte Entfernung der Dichtungsmasse vom beschichteten oder unbeschichteten Verschluß

Dichtungsfunktionsprüfung

Es wird überprüft, ob nach der Beanspruchung das Vakuum erhalten geblieben ist bzw. ob Füllgut austritt.

Beschaffenheitsprüfung

Es wird beurteilt, ob die Dichtungsmasse funktionstüchtig geblieben und/oder brüchig, rissig oder aufgequollen ist oder der Untergrund (Blech) sichtbar ist.

**Tabelle 1: Untersuchte Dichtungsmassen**

| | A | B | C | D | E | F |
|---|---|---|---|---|---|---|
| Isocyanat[1]) | 92 | 92 | 74,5 | 76 | 69,6 | 68,2 |
| Polyamin[2]) | 8 | 7 | 6 | 6 | 5,5 | 5,4 |
| Titandioxid | – | – | 0,8 | 0,8 | 0,7 | 0,7 |
| Bariumsulfat | – | – | 7,3 | 7,6 | 7,0 | 6,9 |
| Aluminiumsilikat | – | – | 7,4 | 8,6 | 8,0 | 7,8 |
| Dimethylpolysiloxan ($M_w > 100$) | – | – | 4 | – | – | 2,0 |
| Azodicarbonamid, 50 %ig in Propylen-glykol | – | 1 | – | 1,0 | – | – |
| Propylenglykol | – | – | – | – | 9,2 | 9,0 |
| Viskosität (s)[3]) | 110 | 100 | 130 | 130 | 50 | 50 |
| Shore-A-Härte | 55 | 30–35 | 65 | 35 | 50–55 | 50–55 |

1) = ε-Caprolactam blockiertes Toluylendiisocyanat
2) = 4,4 Diamino-3,3-dimethyldicyclohexylmethan
3) gemessen im DIN-Becher 8 mm bei 40°C

Tabelle 2

| Zusammensetzung einer Dichtungsmasse V auf Basis eines weichmacherhaltigen PVC-Plastisols | |
|---|---|
| 43,0 Tle | Polyvinylchlorid (PVC) mit dem K-Wert von 70[1] |
| 7,7 Tle | Dioctylphthalat |
| 31,5 Tle | epoxidiertes Sojaöl |
| 1,5 Tle | Octylfettsäureester |
| 1,0 Tle | Titandioxid |
| 8,8 Tle | Bariumsulfat |
| 3,1 Tle | Aluminiumsilikat |
| 0,4 Tle | Calcium-/Zinkstearat |
| 1,7 Tle | Fettsäureamid |
| 1,3 Tle | Siliconöl |

[1] bestimmt nach DIN 53 726

Tabelle 3

| Ergebnisse der Migrationstests | | | | |
|---|---|---|---|---|
| | Dichtungsmasse V | | Dichtungsmasse E | |
| | TR[1] | CA[2] | TR | CA |
| dest. Wasser 10 d 40 °C | 4,4 | 1,4 | 15,1 | 4,1 |
| 3 % Essigsäure 10 d 40 °C | 3,5 | 1,3 | 7,7 | 4,3 |
| 15 % Ethanol 10 d 40 °C | 3,2 | 1,9 | 38,8 | 8,2 |
| n-Heptan | | | | |
| 2 h/50 °C | - | - | 53,1 | 17,4 |
| 2 h/65 °C | 778 | 761 | - | - |

[1] TR: Trockenrückstand des Migrats (mg/100 cm²)
[2] CA: Chloroformlöslicher Anteil am Trockenrückstand (mg/100 cm²)

Tabelle 4

| Untersuchung der Migrate (2 h 70 °C) | | | |
|---|---|---|---|
| Untersuchter Stoff | Testlösung | Dichtungsmasse | |
| | | V | E |
| org. geb. Stickstoff (mg/100 cm$^2$) | dest. Wasser<br>3 % Essigsäure<br>15 % Ethanol | 0,16<br>0,15<br>0,13 | 1,8<br>2,3<br>1,5 |
| Phenol | dest. Wasser<br>3 % Essigsäure | n.w.[1]<br>n.w. | n.w.<br>n.w. |
| Formaldehyd | dest. Wasser<br>3 % Essigsäure | n.w.<br>n.w. | n.w.<br>n.w. |
| Blei, Arsen, Antimon | dest. Wasser<br>3 % Essigsäure | n.w.<br>n.w. | n.w.<br>n.w. |
| Zink | dest. Wasser<br>3 % Essigsäure | n.w.<br>0,07 | n.w.<br>n.w. |
| n.w. = nicht nachweisbar | | | |

**Tabelle 5: Ergebnisse der sensorischen Prüfung**

| Dichtungsmasse | | V | A | B | C | D | E | F |
|---|---|---|---|---|---|---|---|---|
| Leitungswasser 10 d 40°C: | Aussehen | 0/0 | 0/0 | 0/0 | 0/0 | 0/0 | 0/0 | 0/0 |
| | Geruch | 0/0 | 0/0 | 0/0 | 0/0 | 0/0 | 0/0 | 0/0 |
| | Geschmack | 0/0 | 0/0 | 0/0 | 0/0 | 0/0 | 0/0 | 0/0 |
| Mineralwasser 10 d 40°C: | Aussehen | 0/0 | 0/0 | 0/0 | 0/0 | 0/0 | 0/0 | 0/0 |
| | Geruch | 0/0 | 0/0 | 0/0 | 0/0 | 0/0 | 0/0 | 0/0 |
| | Geschmack | 0/0 | 0/0 | 0/0 | 0/0 | 0/0 | 0/0 | 0/0 |
| Apfelsaft 2 h 50°C | Aussehen | 0/0 | 0/0 | 0/0 | 0/0 | 0/0 | 0/0 | 0/0 |
| | Geruch | 0/0 | 0/0 | 0/0 | 0/0 | 0/0 | 0/0 | 0/0 |
| | Geschmack | 0/0 | 0/0 | 0/0 | 0/0 | 0/0 | 0/0 | 0/0 |

0 = keine wahrnehmbare Abweichung: 1 = gerade wahrnehmbare Abweichung,

2 = schwache Abweichung, 3 = deutliche Abweichung, 4 = starke Abweichung

erster angegebener Wert: 10 ml Testlösung/$cm^2$, zweiter angegebener Wert

= 2 ml Testlösung/$cm^2$

EP 0 459 989 B1

Tabelle: 6:  Eigenschaften der Dichtungsmassen für Kronkorken nach Pasteurisation (30 min, 90°C)

| Beispiel | 1 | 2 | 3 | 4 | 5 | 6 |
|---|---|---|---|---|---|---|
| Dichtungsmasse | B | B | B | B | B | B |
| Substrat | ECCS[1] | ECCS | ECCS | TP[2] | TP | TP |
| Untergrund | unbesch. | EP[3] | 0[4] | unbesch. | EP | 0 |
| Auflage Dichtmasse (g) | 0,5 | 0,5 | 0,5 | 0,5 | 0,5 | 0,5 |
| Beschaffenheit | i.O. | i.O. | i.O. | i.O. | i.O. | i.O. |
| Haftung | gut | gut | gut | gut | gut | gut |
| Vakuum | i.O.[5] | i.O. | i.O. | i.O. | i.O. | i.O. |

[1] ECCS = "Electrolytic chromium – coated steel" (verchromter Stahl)

[2] TP = "tin plated" = Weißblech E 2,8/2,8 (DIN 1616)

[3] EP = Haftlack auf Epoxy-Phenolharz-Basis

[4] 0 = Organosol-Haftlack

[5] i.O. = in Ordnung

EP 0 459 989 B1

| Tabelle: 7: | Eigenschaften der Dichtungsmasse D für Kronkorken nach Pasteurisation (30 min, 90 °C) | | | | | |
|---|---|---|---|---|---|---|
| Beispiel | 7 | 8 | 9 | 10 | 11 | 12 |
| Dichtungsmasse | D | D | D | D | D | D |
| Substrat | ECCS[1] | ECCS | ECCS | TP[2] | TP | TP |
| Untergrund | unbesch. | EP[3] | 0[4] | unbesch. | EP | 0 |
| Auflage Dichtmasse (g) | 0,5 | 0,5 | 0,5 | 0,5 | 0,5 | 0,5 |
| Beschaffenheit | i.O. | i.O. | i.O. | i.O. | i.O. | i.O. |
| Haftung | gut | gut | gut | gut | gut | gut |
| Vakuum | i.O.[5] | i.O. | i.O. | i.O. | i.O. | i.O. |

[1] ECCS = "Electrolytic chromium - coated steel" (verchromter Stahl)

[2] TP = "tin plated" = Weißblech E 2,8/2,8 (DIN 1616)

[3] EP = Haftlack auf Epoxy-Phenolharz-Basis

[4] 0 = Organosol-Haftlack

[5] i.O. = in Ordnung

EP 0 459 989 B1

**Tabelle 8:** Eigenschaften der Dichtungsmassen in Flaschendrehverschlüssen nach Pasteurisation (30 min, 95°C)

| Beispiel | 13 | 14 | 15 | 16 |
|---|---|---|---|---|
| Dichtungsmasse | C | C | F | F |
| Substrat | Aluminium | Aluminium | Aluminium | Aluminium |
| Untergrund | $0^{1)}$ | $2\ S^{2)}$ | 0 | 2S |
| Auflage Dichtmasse (g) | 0,5 | 0,5 | 0,5 | 0,5 |
| Beschaffenheit | i.O. | i.O. | i.O. | i.O. |
| Haftung | gut | gut | gut | gut |
| Vakuum | i.O. | i.O. | i.O. | i.O. |

[1] 0 = Organosol-Haftlack

[2] 2S = 2-Schicht-Lackaufbau: Grundierung: Epoxy-Phenolharz-Lack, Deckschicht Organosol

[3] i.O. = in Ordnung

EP 0 459 989 B1

**Tabelle 9:** Eigenschaften der Dichtungsmassen von Gläserverschlüssen nach Sterilisation (45 min, 125°C)

| Beispiel | 17 | 18 | 19 | 20 | 21 | 22 |
|---|---|---|---|---|---|---|
| Dichtungsmasse | C | C | C | C | C | C |
| Substrat | TFS[1] | TFS | TP[2] | TP | Al[3] | Al |
| Untergrund | 0[4] | 2S[5] | 0 | 2S | 0 | 2S |
| Auflage Dichtungs-masse (g) | | | | | | |
| Ø 65 mm | 1,0 | 1,0 | 1,0 | 1,0 | 1,0 | 1,0 |
| Ø 76 mm | 1,5 | 1,5 | 1,5 | 1,5 | 1,5 | 1,5 |
| Beschaffenheit | i.O.[6] | i.O. | i.O. | i.O. | i.O. | i.O. |
| Haftung | gut | gut | gut | gut | gut | gut gut |
| Vakuum | i.O. | i.O. | i.O. | i.O. | i.O. | i.O. i.O. |

[1] TFS = "tin free steel" = zinnfreier Stahl

[2] TP = "tin plated" = Weißlack E 2,8/2,8 (DIN 1616)

[3] Al = Aluminium

[4] 0 = Organosol-Haftlack

[5] 2 S = 2-Schicht-Lackaufbau: Grundierung: Epoxy-Phenolharz-Lack; Decklack = Organosol

[6] i.O.= in Ordnung

EP 0 459 989 B1

**Tabelle 10:** Eigenschaften der Dichtungsmassen in Gläserverschlüssen nach Sterilisation (45 min, 125°C)

| Beispiel | 23 | 24 | 25 | 26 | 27 | 28 | 29 | 30 | 31 |
|---|---|---|---|---|---|---|---|---|---|
| Dichtungsmasse | E | E | E | E | E | E | F | F | F |
| Substrat | TFS[1] | TFS | TP[2] | TP | Al[3] | Al | TFS | TP | Al |
| Untergrund | 0[4] | 2S[5] | 0 | 2S | 0 | 2S | 2S | 2S | 2S |
| Auflage Dichtungs-masse (g) | | | | | | | | | |
| Ø 65 mm | 1,0 | 1,0 | 1,0 | 1,0 | 1,0 | 1,0 | 1,0 | 1,0 | 1,0 |
| Ø 76 mm | 1,5 | 1,5 | 1,5 | 1,5 | 1,5 | 1,5 | 1,5 | 1,5 | 1,5 |
| Beschaffenheit | i.O.[6] | i.O. | i.O. | i.O. | i.O. | i.O. | i.O. | i.O. | i.O. |
| Haftung | gut | gut | gut | gut | gut | gut | gut | gut | gut |
| Vakuum | i.O. | i.O. | i.O. | i.O. | i.O. | i.O. | i.O. | i.O. | i.O. |

[1] TFS = "tin free steel" = zinnfreier Stahl

[2] TP = "tin plated" = Weißlack E 2,8/2,8 (DIN 1616)

[3] Al = Aluminium

[4] 0 = Organosol-Haftlack

[5] 2 S = 2-Schicht-Lackaufbau: Grundierung: Epoxy-Phenolharz-Lack; Decklack = Organosol

[6] i.O.= in Ordnung

EP 0 459 989 B1

Tabelle 11

| Eigenschaften der Dichtungsmassen von Hobbock-Deckeln (∅ 34,5 cm) nach Lagerung mit technischen Füllgütern | | | | |
|---|---|---|---|---|
| Beispiel | 32 | 33 | 34 | 35 |
| Dichtungsmasse | B | B | B | B |
| Substrat | ECCS[1] | ECCS | TP[2] | TP |
| Untergrund | unbesch. | EP[3] | unbesch. | EP |
| Auflage | 12 | 12 | 12 | 12 |
| Dicht.-masse (g) | | | | |
| Beschaffenheit | i.O.[4] | i.O. | i.O. | i.O. |
| Haftung | gut | gut | gut | gut |

[1] ECCS = "Elektrolytic chromium-coated steel" (verchromter Stahl)
[2] TP = "tin plated" = Weißblech E 2,8/2,8 (DIN 1616)
[3] EP = Haftlack auf Epoxy-Phenolharz-Basis
[4] i.O. = in Ordnung

Tabelle 12

| Eigenschaften der Dichtungsmasse D in Hobbock-Deckeln (∅ 34,5 cm) nach Lagerung mit technischen Füllgütern | | | | |
|---|---|---|---|---|
| Beispiel | 36 | 37 | 38 | 39 |
| Dichtungsmasse | D | D | D | D |
| Substrat | ECCS[1] | ECCS | TP[2] | TP |
| Untergrund | unbesch. | EP[3] | unbesch. | EP |
| Auflage | 12 | 12 | 12 | 12 |
| Dicht.-masse (g) | | | | |
| Beschaffenheit | i.O.[4] | i.O. | i.O. | i.O. |
| Haftung | gut | gut | gut | gut |

[1] ECCS = "Elektrolytic chromium-coated steel" (verchromter Stahl)
[2] TP = "tin plated" = Weißblech E 2,8/2,8 (DIN 1616)
[3] EP = Haftlack auf Epoxy-Phenolharz-Basis
[4] i.O. = in Ordnung

EP 0 459 989 B1

Tabelle 13

| Eigenschaften der Dichtungsmasse B in Eimerdeckeln (∅ 24 cm) | | | | |
|---|---|---|---|---|
| Beispiel | 40 | 41 | 42 | 43 |
| Dichtungsmasse | B | B | B | B |
| Substrat | TP[1] | TP | TP | TP |
| Untergrund | unbesch. | unbesch. | EP[2] | |
| Auflage Dicht.-masse (g) | 7 | 7 | 7 | 7 |
| Füllgut | tech. | tech. | LM[3] | LM |
| Beschaffenheit | i.O.[4] | i.O. | i.O. | i.O. |
| Haftung | gut | gut | gut | gut |

[1] TP = "tin plated" = Weißblech E 2,8/2,8 (DIN 1616)
[2] EP = Haftlack auf Epoxy-Phenolharz-Basis
[3] LM = Lebensmittel
[4] i.O. = in Ordnung

Tabelle 14

| Eigenschaften der Dichtungsmasse D in Eimer-Deckeln (∅ 24 cm) nach Lagerung mit technischen Füllgütern | | | | |
|---|---|---|---|---|
| Beispiel | 44 | 45 | 46 | 47 |
| Dichtungsmasse | D | D | D | D |
| Substrat | TP[1] | TP | TP | TP |
| Untergrund | unbesch. | unbesch. | RP[2] | EP |
| Auflage Dicht.-masse (g) | 7 | 7 | 7 | 7 |
| Füllgut | techn. | techn. | LM[3] | LM |
| Beschaffenheit | i.O. | i.O. | i.O. | i.O. |
| Haftung | gut | gut | gut | gut |

[1] TP = "tin plated" = Weißblech
[2] EP = Haftlack auf Epoxy-Phenolharz-Basis
[3] LM = Lebensmittel
[4] i.O. = in Ordnung

Tabelle 15

| Eigenschaften der Dichtungsmassen in Fässerdeckeln (∅ 60 cm) | | | | |
|---|---|---|---|---|
| Beispiel | 48 | 49 | 50 | 51 |
| Dichtungsmasse | B | B | D | D |
| Substrat | TFS[1] | TFS | TFS | TFS |
| Untergrund | unbesch. | EP[2] | unbesch. | EP |
| Auflage Dich.-masse (g) | 160 | 160 | 160 | 160 |
| Beschaffenheit | i.O. | i.O. | i.O. | i.O. |
| Haftung | gut | gut | gut | gut |

[1] TFS = "tin free steel" = zinnfreier Stahl
[2] EP-Haftlack auf Epoxy-Phenolharz-Basis
[3] i.O. = in Ordnung

16

Zusammenfassung der Untersuchungsergebnisse

Die qualitative und quantitative Untersuchung der Migrate im Hinblick auf die spezifische Migration ergab bezüglich organisch gebundenem Stickstoff, Phenol, Formaldehyd und Schwermetalle keine Hinweise auf das Vorliegen von gesundheitlich bedenklichen Anteilen und somit eine Eignung der Dichtungsmassen für die Verwendung bei Lebensmittelverpackungen. Im Gegensatz zu Dichtungsmassen auf PVC-Plastisol-Basis tritt auch durch Fette und Öle (simuliert durch n-Heptan) keine Herauslösung von Weichmacher auf (die Dichtungsmassen A bis F enthalten keinen Weichmacher), so daß die Dichtfunktion auch bei derartigen Füllgütern im Gegensatz zu den herkömmlichen Dichtungsmassen V nicht beeinträchtigt wird.

Aufgrund der Ergebnisse der sensorischen Prüfung sind bei Einsatz der Dichtungsmassen in Lebensmittelverpackungen keine geruchlichen und geschmacklichen Veränderungen zu erwarten, die wäßrige, saure oder schwach alkoholische Füllgüter beeinträchtigen würden. Die durchgeführte Prüfung mit einer Einwirkung von 2 ml Testlösung pro cm$^2$ Oberfläche Dichtungsmasse ist nämlich eine sehr viele höhere Beanspruchung als es für den praktischen Verwendungszweck der Dichtungsmasse in Betracht kommt und selbst bei diesen Bedingungen wurde keine Geruchs- und Geschmacksbeeinflussung der Testlösungen beobachtet. Ferner wurden unter den Testbedingungen auch keine Trübungs- und Farbstoffe an die verwendeten Prüflösungen abgegeben.

Die praktische Prüfung der Dichtungsmassen in den unterschiedlichen Verschlußteilen (Kronkorken, Gläserverschlüsse, Hobbock-Deckel, Eimerdeckel, Fässerdeckel und Flaschendrehverschlüsse) bei verschiedenen - die in der Anwendung als Verpackungen für Lebensmittel und technische Füllgüter auftretenden Beanspruchungen simulierenden - Beanspruchungen ergaben ebenfalls hervorragende Ergebnisse.

Die Simulierung der Beanspruchungen im Falle von Lebensmittelverpackungen durch Erhitzen der mit verschiedenen wäßrigen Prüflösungen gefüllten Verpackungen und an- schließende Beurteilung der Dichtungsmassen ergab eine hervorragende Dichtungsfunktion ohne Verluste bei der Beanspruchung, verbunden mit guten Haftungseigenschaften.

Weiterhin zeichnen sich die Dichtungsmassen bei Beanspruchung durch reaktive Füllgüter, wie z.B. Lösungsmittel und Öle, durch eine äußerst gute Beständigkeit gegenüber diesen Stoffen aus. Im Gegensatz zu weichmacherhaltigen Dichtungsmassen auf PVC-Plastisol-Basis bleibt -bedingt durch diese gute Beständigkeit - die Dichtungsfunktion und Elastizität der erfindungsgemäßen Dichtungsmassen trotz Einwirken dieser reaktiven Substanzen erhalten.

**Patentansprüche**

1. Verfahren zur Herstellung von Verschlüssen zum dichten Verschließen von Verpackungsbehältern, bei dem auf die Innenseite der Verschlüsse eine Dichtungsmasse appliziert und eingebrannt wird, die aus
   A) 65 bis 93 Gew.-% eines flüssigen, blockierten Diisocyanates
   B) 2 bis 15 Gew.-% eines flüssigen Di- und/oder Polyamins
   C) 0 bis 25 Gew.-% Pigmente und/oder Füllstoffe
   D) 0 bis 20 Gew.-% eines oder mehrerer reaktiver Verdünner
   E) 0 bis 8 Gew.-% Hilfs- und Zusatzstoffe
   besteht, wobei die Summe der Gewichtsanteile der Komponenten A bis E jeweils 100 Gew.-% beträgt.

2. Verfahren nach Anspruch 1, bei dem eine Dichtungsmasse appliziert und eingebrannt wird, die aus
   A) 70 bis 90 Gew.-% eines flüssigen, blockierten Diisocyanates
   B) 6 bis 12 Gew.-% eines flüssigen Di- und/oder Polyamins
   C) 0 bis 20 Gew.-% Pigmente und/oder Füllstoffe
   D) 0 bis 10 Gew.-% eines oder mehrerer reaktiver Verdünner
   E) 0 bis 8 Gew.-% Hilfs- und Zusatzstoffe
   besteht, wobei die Summe der Gewichtsteile der Komponenten A bis E jeweils 100 Gew.-% beträgt.

3. Verfahren nach Anspruch 1 oder 2, bei dem eine Dichtungsmasse appliziert und eingebrannt wird, die als Komponente A blockiertes Toluylendiisocyanat enthält.

4. Verfahren nach einem der Ansprüche 1 bis 3, bei dem eine Dichtungsmasse appliziert und eingebrannt wird, die als Komponente A mit $\epsilon$-Caprolactam blockiertes Diisocyanat enthält.

5. Verfahren nach einem der Ansprüche 1 bis 4, bei dem eine Dichtungsmasse appliziert und eingebrannt wird, die als Komponente B 4,4-Diamino-3,3-dimethyldicyclohexylmethan und/oder Polyoxypropylentria-

17

EP 0 459 989 B1

min mit einem mittleren Molekulargewicht $M_W$ von 400 bis 450 enthält.

6. Verfahren nach einem der Ansprüche 1 bis 5, bei dem der Verschluß zunächst mit einem Lack beschichtet wird, ehe die Dichtungsmasse appliziert und eingebrannt wird.

7. Verpackungsbehälter mit einem Verschluß, bei dem auf die Innenseite des Verschlusses eine Dichtungsmasse appliziert und eingebrannt worden ist, die aus
    A) 65 bis 93 Gew.-% eines flüssigen, blockierten Diisocyanates
    B) 2 bis 15 Gew.-% eines flüssigen Di- und/oder Polyamins
    C) 0 bis 25 Gew.-% Pigmente und/oder Füllstoffe
    D) 0 bis 20 Gew.-% eines oder mehrerer reaktiver Verdünner
    E) 0 bis 8 Gew.-% Hilfs- und Zusatzstoffe
    besteht, wobei die Summe der Gewichtsanteile der Komponenten A bis E jeweils 100 Gew.-% beträgt.

8. Verpackungsbehälter nach Anspruch 7, bei dem die Dichtungsmasse aus
    A) 70 bis 90 Gew.-% eines flüssigen, blockierten Diisocyanates
    B) 6 bis 12 Gew.-% eines flüssigen Di- und/oder Polyamins
    C) 0 bis 20 Gew.-% Pigmente und/oder Füllstoffe
    D) 0 bis 10 Gew.-% eines oder mehrerer reaktiver Verdünner
    E) 0 bis 8 Gew.-% Hilfs- und Zusatzstoffe
    besteht, wobei die Summe der Gewichtsteile der Komponenten A bis E jeweils 100 Gew.-% beträgt.

9. Verpackungsbehälter nach Anspruch 7 oder 8, bei dem die Dichtungsmasse als Komponente A blockiertes Toluylendiisocyanat enthält.

10. Verpackungsbehälter nach einem der Ansprüche 7 bis 9, bei dem die Dichtungsmasse als Komponente (A) mit $\epsilon$-Caprolactam blockiertes Diisocyanat enthält.

11. Verpackungsbehälter nach einem der Ansprüche 7 bis 10, bei dem die Dichtungsmasse als Komponente B 4,4-Diamino-3,3-dimethyldicyclohexylmethan und/oder Polyoxypropylentriamin mit einem mittleren Molekulargewicht $M_W$ von 400 bis 450 enthält.

12. Verpackungsbehälter nach einem der Ansprüche 7 bis 11, bei dem der Verschluß zunächst mit einem Lack beschichtet worden ist, ehe die Dichtungsmasse appliziert und eingebrannt worden ist.

13. Verschluß für Verpackungsbehälter, dadurch gekennzeichnet, daß er nach einem Verfahren der Ansprüche 1 bis 6 hergestellt worden ist.

**Claims**

1. Process for the preparation of closures for imperviously sealing packaging containers, by which a sealing composition is applied and stoved onto the inside of the closure, said composition consisting of
    A) 65 to 93 % by weight of a liquid, blocked diisocyanate
    B) 2 to 15 % by weight of a liquid diamine and/or polyamine
    C) 0 to 25 % by weight of pigments and/or fillers
    D) 0 to 20 % by weight of one or more reactive diluents
    E) 0 to 8 % by weight of auxiliaries and additives,
    where the sum of the proportions by weight of the components A to E is 100 % by weight in each case.

2. Process according to Claim 1, in which the sealing compound which is applied and stoved consists of
    A) 70 to 90 % by weight of a liquid, blocked diisocyanate
    B) 6 to 12 % by weight of a liquid diamine and/or polyamine
    C) 0 to 20 % by weight of pigments and/or fillers
    D) 0 to 10 % by weight of one or more reactive diluents
    E) 0 to 8 % by weight of auxiliaries and additives,
    where the sum of the proportions by weight of the components A to E is 100 % by weight in each case.

18

3. Process according to Claim 1 or 2, in which the sealing composition which is applied and stoved contains blocked toluylene diisocyanate as component A.

4. Process according to one of Claims 1 to 3, in which the sealing composition which is applied and stoved contains $\epsilon$-caprolactam-blocked diisocyanate as component A.

5. Process according to one of Claims 1 to 4, in which the sealing composition which is applied and stoved contains, as component B, 4,4-diamino-3,3-dimethyldicyclohexylmethane and/or polyoxypropylenetriamine with an average molecular weight $M_w$ of 400 to 450.

6. Process according to one of Claims 1 to 5, in which the closure is first coated with a paint before the sealing composition is applied and stoved.

7. Packaging container with a closure, the inside of which has been coated and stoved with a sealing composition which consists of
    A) 65 to 93 % by weight of a liquid, blocked diisocyanate
    B) 2 to 15 % by weight of a liquid diamine and/or polyamine
    C) 0 to 25 % by weight of pigments and/or fillers
    D) 0 to 20 % by weight of one or more reactive diluents
    E) 0 to 8 % by weight of auxiliaries and additives,
    where the sum of the proportions by weight of the components A to E is 100 % by weight in each case.

8. Packaging container according to Claim 7, in which the sealing composition consists of
    A) 70 to 90 % by weight of a liquid, blocked diisocyanate
    B) 6 to 12 % by weight of a liquid diamine and/or polyamine
    C) 0 to 20 % by weight of pigments and/or fillers
    D) 0 to 10 % by weight of one or more reactive diluents
    E) 0 to 8 % by weight of auxiliaries and additives,
    where the sum of the proportions by weight of the components A to E is 100 % by weight in each case.

9. Packaging container according to Claim 7 to 8, in which the sealing composition contains blocked toluylene diisocyanate as component A.

10. Packaging container according to one of Claims 7 to 9, in which the sealing composition contains $\epsilon$-caprolactam-blocked diisocyanate as component (A).

11. Packaging container according to one of Claims 7 to 10, in which the sealing composition contains, as component B, 4,4-diamino-3,3-dimethyldicyclohexylmethane and/or polyoxypropylenetriamine with an average molecular weight $M_w$ of 400 to 450.

12. Packaging container according to one of Claims 7 to 11, in which the closure has first been coated with a paint before the sealing composition has been applied and stoved.

13. Closure for packaging containers, characterized in that it has been prepared by a process of Claims 1 to 6.

## Revendications

1. Procédé de fabrication de fermetures en vue de la fermeture étanche d'emballages de conditionnement, lors duquel on procède, sur la face interne des fermetures, à l'application et à la cuisson d'une masse d'étanchéité, qui se compose
    A) de 65 à 93 % en poids d'un diisocyanate bloqué liquide
    B) de 2 à 15 % en poids d'une diamine et/ou d'une polyamine liquide
    C) de 0 à 25 % en poids de pigments et/ou de charges
    D) de 0 à 20 % en poids d'un ou de plusieurs diluants réactifs

EP 0 459 989 B1

E) de 0 à 8 % en poids d'additifs et d'adjuvants
la somme des proportions en poids des composants A à E étant à chaque fois de 100 % en poids.

2. Procédé selon la revendication 1, lors duquel on procède à l'application et à la cuisson d'une masse d'étanchéité qui se compose
A) de 70 à 90 % en poids d'un diisocyanate bloqué liquide
B) de 6 à 12 % en poids d'une diamine et/ou d'une polyamine liquide
C) de 0 à 20 % en poids de pigments et/ou de charges
D) de 0 à 10 % en poids d'un ou de plusieurs diluants réactifs
E) de 0 à 8 % en poids d'additifs et d'adjuvants
la somme des proportions en poids des composants A à E étant à chaque fois de 100 % en poids.

3. Procédé selon la revendication 1 ou 2, lors duquel on procède à l'application et à la cuisson d'une masse d'étanchéité, qui contient en tant que composant A du diisocyanate de toluylène bloqué.

4. Procédé selon l'une quelconque des revendications 1 à 3, lors duquel on procède à l'application et à la cuisson d'une masse d'étanchéité, qui contient en tant que composant A un diisocyanate bloqué à l'aide de caprolactame-epsilon.

5. Procédé selon l'une quelconque des revendications 1 à 4, lors duquel on procède à l'application et à la cuisson d'une masse d'étanchéité, qui contient en tant que composant B du 4,4-diamino-3,3-diméthyldicyclohexylméthane et/ou une polyoxypropylènetriamine ayant un poids moléculaire moyen $M_w$ de 400 à 450.

6. Procédé selon l'une quelconque des revendications 1 à 5, lors duquel on revêt tout d'abord la fermeture à l'aide d'une laque, avant de procéder à l'application et à la cuisson de la masse d'étanchéité.

7. Emballage de conditionnement ayant une fermeture, pour lequel on a procédé, sur la face interne de la fermeture, à l'application et à la cuisson d'une masse d'étanchéité, qui se compose
A) de 65 à 93 % en poids d'un diisocyanate bloqué liquide
B) de 2 à 15 % en poids d'une diamine et/ou d'une polyamine liquide
C) de 0 à 25 % en poids de pigments et/ou de charges
D) de 0 à 20 % en poids d'un ou de plusieurs diluants réactifs
E) de 0 à 8 % en poids d'additifs et d'adjuvants
la somme des proportions en poids des composants A à E étant à chaque fois de 100 % en poids.

8. Emballage de conditionnement selon la revendication 7, pour lequel la masse d'étanchéité se compose
A) de 70 à 90 % en poids d'un diisocyanate bloqué liquide
B) de 6 à 12 % en poids d'une diamine et/ou d'une polyamine liquide
C) de 0 à 20 % en poids de pigments et/ou de charges
D) de 0 à 10 % en poids d'un ou de plusieurs diluants réactifs
E) de 0 à 8 % en poids d'additifs et d'adjuvants
la somme des proportions en poids des composants A à E étant à chaque fois de 100 % en poids.

9. Emballage de conditionnement selon la revendication 7 ou 8, pour lequel la masse d'étanchéité contient en tant que composant A du diisocyanate de toluylène bloqué.

10. Emballage de conditionnement selon l'une quelconque des revendications 7 à 9, pour lequel la masse d'étanchéité, contient en tant que composant A un diisocyanate bloqué à l'aide de caprolactame-epsilon.

11. Emballage de conditionnement selon l'une quelconque des revendications 7 à 10, pour lequel la masse d'étanchéité, contient en tant que composant B du 4,4-diamino-3,3-diméthyldicyclohexylméthane et/ou une polyoxypropylène-triamine ayant un poids moléculaire moyen $M_w$ de 400 à 450.

12. Emballage de conditionnement selon l'une quelconque des revendications 7 à 11, pour lequel on revêt tout d'abord la fermeture à l'aide d'une laque, avant de procéder à l'application et à la cuisson de la masse d'étancheité.

13. Fermeture pour emballage de conditionnement, caractérisé en ce qu'elle a été fabriquée conformément à un procédé des revendications 1 à 6.